# EUROPÄISCHE PATENTSCHRIFT

(11) **EP 4 000 388 B1**
(45) Veröffentlichungstag und Bekanntmachung des Hinweises auf die Patenterteilung: **15.07.2026**
(21) Anmeldenummer: 21208583.1
(22) Anmeldetag: 16.11.2021
(51) Int. Cl.: A01K 9/00

(54) **TRÄNKESYSTEM**
DRINKING SYSTEM
SYSTÈME D'ABREUVOIR

(30) Priorität: 16.11.2020 EP 20207853
(43) Veröffentlichungstag der Anmeldung: 25.05.2022
(73) Patentinhaber: Justus-Liebig-Universität Gießen, Körperschaft des öffentlichen Rechts, 35390 Gießen (DE)
(72) Erfinder: Vogt, Anina, 35415 Pohlheim (DE); König von Borstel, Uta, 34323 Malsfeld (DE)
(74) Vertreter: Stumpf, Peter

(56) Entgegenhaltungen:
- EP-A1- 4 000 387
- CN-A- 106 962 219
- FR-A- 1 543 353
- US-A- 394 955

## Beschreibung

In der konventionellen Milchviehhaltung werden die Kälber größtenteils direkt nach der Geburt von der Mutter getrennt und durch Personal mittels Tränkesystemen ernährt. Bekannte Tränkesysteme sind Tränkeeimer, Tränkewannen, Tränkewagen, Tränkeautomaten oder Flaschen mit Saugnuckel (Nuckel, Sauger, Milchsauger). In der Natur suchen die Kälber hingegen instinktiv ca. zwei Stunden nach der Geburt den Weg zum Euter der Mutter, um die Kolostralmilch (Biestmilch) aufzunehmen. Neben der konventionellen Tränkung mittels der bekannten Tränkesysteme werden Kälber auch teilweise bei der ersten Mahlzeit gedrencht (zwangsgetränkt), um sicherzustellen, dass die passive Immunisierung des Kalbes durch die Gabe der Kolostralmilch erfolgt. Gründe für dieses Vorgehen liegen in dem kurzen Zeitfenster für die passive Immunisierung von ca. 6 Stunden nach der Geburt und dem Umstand, dass die Kälber nicht zuverlässig selbstständig innerhalb dieser 6 Stunden aus den bekannten Tränkesystemen die Kolostralmilch trinken. Zwangstränken (Drenchen) ist jedoch in Deutschland ohne medizinische Begründung laut Tierschutzgesetz unzulässig (§ 3 (9) TierSchG) und auch problematisch, da es durch die üblicherweise verabreichte Menge von bis zu 4 Litern zu erzwungenem Pansentrinken bei den Kälbern kommen kann.

Da die Kälber Schwierigkeiten haben, den künstlichen Saugnuckel bei den bekannten Tränkesystemen zu verstehen, müssen sie erst durch das Personal trainiert werden. Das ist abhängig vom jeweiligen Kalb sehr zeitaufwendig. Problemtrinker können noch bis zu 4 Tage nach der Geburt individuelle Betreuung benötigen. Kälber, die Probleme haben, von den bekannten Tränkesystemen zu trinken und nicht genügend Aufmerksamkeit vom Personal bekommen, können jedoch wichtige Mahlzeiten verpassen, wobei eine gute Versorgung gerade in den ersten Tagen entscheidend für die Gesundheit des Kalbes ist. Neben durch Hunger induzierten Stress kommt es auch zur Unterversorgung des Kalbes, was es anfälliger für Krankheiten macht.

In der Natur verläuft die Eutersuche bei Kälbern größtenteils nach der Versuch-und-Irrtum-Methode, indem die Kälber den Körper der Mutter mit ihrem Maul oder ihrer Zunge absuchen. Die Eutersuche bei Kälbern richtet sich größtenteils auf die Vorder- und Hinterbeine der Mutter und die Kälber zeigen eine Präferenz, ihr Maul nach oben und - wenn möglich - in eine Aussparung (Achsel oder Leistengegend) zu stupsen. Der Bereich, auf den sich das Kalb bei der Suche nach den Zitzen konzentriert, ist stark von der Konformation des Unterbauches des Muttertieres abhängig. Wenn das Euter am höchsten Punkt des Unterbauches lokalisiert ist, konzentriert sich die Suche fast ausschließlich auf die Euterregion. Liegt das Euter hingegen tiefer als die Brustbeinregion, richtet sich die Suche verstärkt auf die Vorderbeine der Mutterkuh oder aber auf Regionen oberhalb der Zitzen. Das Aussehen und die Konformation des Unterbauches und Euters des Muttertieres wurden in mehreren Studien als entscheidender Faktor für die Zeitspanne von der Geburt bis zum ersten Saugvorgang durch (motivierte) Kälber beschrieben. Untersuchungen zeigen, dass Kälber bei der Eutersuche intuitiv versuchen, ihr Maul unter das Abdomen der Mutterkuh zu bringen und anschließend hoch zu schieben, was vermutlich damit zu begründen ist, dass bei allen Arten von wildlebenden Huftieren (Ungulata) das Euter jeweils der höchste Teil des weiblichen Unterbauches ist. In Ergänzung dazu zeigen Studien aus der Verhaltensforschung, dass Kälber auf der Suche nach der Zitze zunächst an den Beinen beginnen und dann den Suchvorgang entlang einer horizontalen Fläche, nämlich der Unterseite des Abdomens der Mutter auf Höhe ihres Kopfes weiterführen. Die Tränkesysteme im Stand der Technik sind nicht intuitiv für das Kalb verständlich. Bei diesen Tränkesystemen wird der Saugnuckel durch ein Loch in der Boxen- oder Kälberiglutür gehängt. Das Kalb befindet sich also vor einer senkrechten Fläche mit einem waagerecht stehenden Nuckel, der Intuition nach sucht es jedoch unterhalb einer waagerechten, leicht ansteigenden Fläche nach einem eher senkrecht hängenden Nuckel.

Selbstverständlich ist das Muttertier maßgeblich an der Eutersuche beteiligt, da es das Kalb mit Interaktion, Vokalisation, etc. dabei unterstützt, das Euter zu lokalisieren. Zusätzlich positioniert sich das Muttertier entsprechend vor dem Kalb. Es ist bekannt, dass es bei Kälbern zum Besaugen von Artgenossen oder zur Eutersuche bei betreuenden Personen kommt, wenn man sie direkt nach der Geburt von der Mutter trennt. Ebenso suchen diese Kälber ein Euter an Gegenständen, die sich im Stall befinden, z.B. auf der Unterseite des Futtertroges. Gegenseitiges Besaugen ist bei künstlich aufgezogenen Milchkälbern weit verbreitet und zu 78% auf die Leistengegend anderer Kälber gerichtet. Dies legt nahe, dass die Hilfe durch das Muttertier zur Euterlokalisation nicht zwingend notwendig ist. Eigene Beobachtungen von Kälbern mit Zugang zu Gruppentränken zeigen, dass Kälber häufig an die Tränke angesetzt werden, dort kurz saugen, dann aber abfallen, um zu ihren Artgenossen zu laufen und diese am Nabel oder zwischen den Beinen zu besaugen. Das macht deutlich, wie schlecht verständlich die Tränkesysteme im Stand der Technik für die Kälber sind. Es besteht also die Notwendigkeit, Tränkesysteme zu optimieren, indem natürliche Reize der Mutterkuh simuliert werden.

### Stand der Technik

Üblicherweise werden derzeit Tränkesysteme mit waagerecht stehendem Saugnuckel verwendet. Das Tränkesystem wird entweder an der Innenseite der Kälberiglu- oder Boxenwand angebracht oder für gewöhnlich außen, sodass der Saugnuckel des Tränkesystems durch ein Loch im Gitter des Kälberiglus oder der Kälberbox in den Innenbereich hereinragt.

Weiterhin sind auch Tränkesysteme bekannt, die einen schräg nach unten stehenden Saugnuckel aufweisen, welcher hinsichtlich der Anordnung ähnlich der Zitzen des Muttertieres ist.

Der Nachteil der aktuellen Tränkesysteme ist, dass diese eine für Kälber unintuitive Anordnung des Saugnuckels am Tränkesystem aufweisen. Bei der natürlichen Eutersuche versuchen Kälber intuitiv ihr Maul unter das Abdomen der Mutterkuh zu bringen und tasten sich von dort weiter. Sie suchen also der Intuition nach unterhalb einer waagerechten oder leicht ansteigenden bzw. leicht abfallenden Fläche nach einer eher senkrecht hängenden Zitze bzw. im Falle der bekannten Tränkesysteme dem Saugnuckel. Bei den Tränkesystemen im Stand der Technik befindet sich das Kalb jedoch vor einer senkrechten Fläche (Eimerwand, Wannenwand, Tränkautomatenwand bzw. Boxen- oder Kälberigluwand) mit einem waagerecht stehenden Saugnuckel. Dies ist für das Kalb nicht gut verständlich, erschwert das Auffinden des Saugnuckels und bedarf somit viel Arbeitszeit des Personals, um den Kälbern das Trinken aus den Tränkesystemen beizubringen. Dieses Problem wird aktuell dadurch gelöst, dass man das Kalb immer wieder von Hand ansetzt, bis es eigenständig das Tränkesystem verstanden hat. Dies kann jedoch bei Problemkälbern durchaus vier Tage dauern, während der das Kalb eine intensive Betreuung benötigt. In Arbeitsspitzen mit Personal- und Zeitmangel kann dies schnell auch eine kritische Unterversorgung der Kälber bedingen. Das gilt ganz besonders auch beim Transport von Kälbern, wo innerhalb einer 1-stündigen Versorgungspause alle Kälber vom Transporter entladen und getränkt werden müssen, sodass hier standardmäßig Zeitmangel herrscht.

Diese Problematik lässt sich auch auf andere Säugetiere übertragen, bei welchen das Säugen ebenfalls im Stehen erfolgt und bei denen aus verschiedenen Gründen kein Säugen durch ein Muttertier möglich ist. Beispielhaft sind hier Schafe, Ziegen, Pferde und Kamele genannt, da es in der Haltungspraxis zu einer Trennung des Muttertiers vom Jungtier vor Beendigung der Säugephase kommen kann.

Aus dem Stand der Technik sind folgende Patentschriften bekannt: US 394 955 von James P. Butler, CN 106 962 219 von der Anhui Agricultural University und FR 1 543 353 von M. Marcel Pauly.

Alle drei Schriften beschreiben ein Tränkesystem zum Tränken von jungen Säugetieren, welches jeweils mindestens eine Reservoirkammer, welche zur Aufnahme von Flüssigkeiten geeignet ist, eine direkte Verbindung oder ein flüssigkeitsdurchströmbares Verbindungselement zwischen Reservoirkammer und einem Saugnuckel, sowie mindestens einen Saugnuckel umfassen, aus dem ein auf einem Untergrund stehendes Säugetier Flüssigkeiten aus der Reservoirkammer durch diesen Saugnuckel aufnehmen kann.

Die Schrift US 394 955 beschreibt einen Ferkelkasten mit integrierter Ferkeltränke, welche eine Reservoirkammer umfasst, die von einer Polsterung in halbrunder Form umzogen ist, um den Bauch einer Sau nachzubilden. Die Polsterung ist von geraden Verbindungselementen zwischen Reservoirkammer und Saugnuckel durchzogen, welche die Zitzen nachbilden sollen. Die Ferkeltränke kann mittels Haken in den Ferkelkasten eingehängt werden.

Die Unterseite der Polsterung der in der Schrift US 394 955 beschriebenen Ferkeltränke erfüllt aus folgenden Gründen nicht die Funktion des Führungselementes gemäß unseren Ansprüchen:
Es gibt bei der Ferkeltränke nach US 394 955 keine funktionale Kombination von Polsterung und Saugnuckel, die einem Jungtier das Auffinden des Saugnuckels und das anschließende Saugen in physiologischer Haltung ermöglichen würde. Die Ferkeltränke nach US 394 955 weist drei mögliche Reihen von Saugnuckeln auf, wenn man aus Blickrichtung eines Ferkels schaut, das durch die Luke in den Ferkelkasten eingesetzt wird: Eine vordere, mittlere und hintere Nuckelreihe. Für die vorderste Nuckelreihe, auf die das Ferkel aus Richtung der Luke zuerst treffen würde, gibt es gar kein Führungselement. Hier trifft das Ferkel immer zuerst auf die zu ihm hervorstehenden Saugnuckel, bevor es auf die Polsterung trifft. Auf der anderen Seite kann die Polsterung die Ferkel zwar zur hintersten Reihe der Saugnuckel an der Wand hinführen, allerdings befinden sich dann die Saugnuckel, und vor allem die Nuckelöffnungen, in einem von dem Ferkel abgewandten Winkel. Diese geometrische Anordnung macht es für das Ferkel schwierig bis unmöglich, den Saugnuckel ins Maul zu bekommen. Einem Fachmann erschließt sich, dass hier das Ferkel eher den Saugnuckel von sich wegbiegen würde und abrutschen würde, als diesen ins Maul zu bekommen. Diese Kombination von Polsterung mit Saugnuckel ist also nicht geeignet, um ein Ferkel zum Saugnuckel hinzuführen. Bei der mittleren Reihe der Saugnuckel können die Ferkel die Saugnuckel nur erreichen, wenn die Tränke so tief hängt, dass die Ferkel die Polsterung mit der Schnauze erreichen können. Allerdings bedingt diese tiefe Höhe dann ebenfalls, dass die Ferkel den senkrecht hängenden Saugnuckel fast im 90° Winkel zu sich umbiegen müssen, was diesen nicht mehr flüssigkeitsdurchströmbar macht. Damit die Funktion der Flüssigkeitsdurchfuhr nicht gestört ist, muss die Tränke daher so hoch gehängt werden, dass die Polsterung keine zielführende Funktion als Führungselement hat. Auch hier kann daher nicht von einer funktionalen Kombination von Führelement zum Saugnuckel gesprochen werden und aus diesem Grund ist die Polsterung nicht als Führungselement anzusehen. Damit löst die Schrift US 394 955 nicht die erfindungsgemäße Aufgabe.

Die wesentlichen Nachteile der Schrift US 394 955 sind folgende: Die vorderen Saugnuckel weisen kein Führungselement auf und daher werden die Ferkel nicht intuitiv zu diesen Saugnuckeln geführt. Zusätzlich ist es für eine fachkundige Person fast unmöglich, ein Ferkel von Hand an die hinteren Saugnuckel anzusetzen, da diese sich unterhalb oder hinten am Tränkesystem Richtung Wand befinden. Dadurch muss eine fachkundige Person durch eine Luke arbeiten, was sehr umständlich ist. Durch die vorgegebene Anordnung der Saugnuckel an der Tränke sind diese teilweise durch die Tränke selber abgeschirmt bzw. für die fachkundige Person nicht sichtbar und schlecht zugänglich. Aus diesen Gründen kann die Ferkeltränke weder die Ferkel intuitiv zu den Saugnuckeln führen, noch können bei Ferkeln mit Saugproblemen die Ferkel von Hand zu den Saugnuckeln geführt werden.

Grundsätzlich ist anzumerken, dass die beschriebene Tränke in der Schrift US 394 955 explizit für Ferkel konstruiert wurde, welche von Natur aus in einer liegenden Position bzw. an der liegenden Sau saugen und nicht in einer stehenden Position. Für Ferkel hat damit die annähernd waagerechte Polsterung über ihrem Kopf, unter der sie sich zum Nuckel hin orientieren sollen, keine intuitive Verständlichkeit. Die beschriebene Ferkeltränke in der Schrift US 394 955 mit ihren zumeist fast senkrecht hängenden Saugnuckeln (die genaue Winkelung ist in der Patentschrift nicht näher definiert) bedingt, dass die Ferkel, anders als in der Natur, in stehender Position säugen müssten. Entweder auf den Hinterbeinen stehend, oder wahrscheinlicher, auf allen vier Beinen stehend, aber mit nach hinten in den Nacken gelegtem Kopf. Da Schweine keine verformbaren Lippen besitzen und ihre Rüsselscheibe vor dem Unterkiefer vorsteht, ist es für Ferkel nahezu unmöglich, an einem im Wesentlichen senkrecht hängenden Saugnuckel zu saugen. Damit die Ferkeltränke in der Schrift US 394 955 den Ferkeln das Saugen in einer physiologischen Saughaltung, also mit der Schnauze in mehr oder weniger waagerechter Position ermöglichen könnte, müsste die Ferkeltränke entsprechend so tief eingehängt werden, dass die Saugnuckel sich etwa auf der Rückenhöhe der Ferkel befinden. Da in der vorliegenden Ferkeltränke in der Schrift US 394 955 die Saugnuckel in einem mehr oder weniger senkrechten Winkel zum Boden angebracht sind, bedingt dies, dass die Saugnuckel bei Aufnahme in das Maul in einem nahezu 90° Winkel abknicken und somit nicht mehr flüssigkeitsdurchströmbar sind. Wenn also die Ferkel die Saugnuckel in einer bei Ferkel physiologischer Saughaltung in das Maul nehmen, dann sind die Saugnuckel in der Schrift US 394 955 funktionslos. Dass die vorliegenden Tränke in der Schrift US 394 955 in der Praxis keine breite Anwendung gefunden hat, erschließt sich daher dem Fachmann schnell.

Die Schrift CN 106 962 219 beschreibt eine hoch technisierte Lämmertränke mit automatischer Kontrolle der Milchtemperatur, um eine bessere Fütterungseffizienz zu erzielen. Die Gestaltung dieser Lämmertränke umfasst neben der Reservoirkammer, Verbindungsrohre und mehrere Saugnuckeln, ein Kontrollpanel und Display, sowie Heizstäbe, eine pulsierende Pumpe, Batterie und Isolationsschicht um den Zweck der Temperaturkontrolle der Flüssigkeit zu erfüllen. Allerdings enthält die Schrift CN 106 962 219 kein Führungselement, welches die Lämmer zu dem Saugnuckel hinleiten würde. Zwar umfasst die Lämmertränke eine Holzbodenplatte unterhalb der Reservoirkammer, jedoch erfüllt diese nicht die Funktion, die Lämmer zum Saugnuckel zu leiten. Die Bodenplatte weist einen großen Absatz zum Saugnuckel auf. Daher ist dem Fachmann direkt ersichtlich, dass die Bodenplatte die Lämmer eher vom Saugnuckel ablenkt, weil die Lämmer versuchen würden, am vorstehenden Übergang zwischen der Bodenplatte und dem Rahmen zu saugen. Die Bodenplatte aus der Schrift CN 106 962 219 erfüllt damit nicht die geforderte Funktion eines Führungselementes, das der gezielten Hinführung des Jungtieres zum Saugnuckel dient.

Die Schrift FR 1 543 353 beschreibt ein künstliches Euter zur Fütterung von Boviden. Es besteht aus einer Reservoirkammer, die flüssigkeitsdurchströmbar mit einem Saugnuckel verbunden ist. Dieses künstliche Euter kann entweder seitlich an der Wand oder oben an der Decke mit Halterungen angebracht werden, oder auf einem Fußständer in den Stall gestellt werden. Grundsätzlich befindet sich das künstliche Euter aber frei im Stall, sodass die Jungtiere von allen Seiten Zugang zu den Saugnuckeln haben. Das künstliche Euter in der Schrift FR 1 543 353 umfasst jedoch kein Führungselement, an welchem sich das Jungtier gezielt zum Saugnuckel vorarbeiten kann. Sollte sich das Jungtier von der Mitte der Unterseite des Euters in eine Richtung zum Saugnuckel bewegen, so trifft es auf einen Saugnuckel in einer von ihm weg zeigenden Winkelung, sodass die Saugnuckelöffnung vom Jungtier weg zeigt. Es ist für einen Fachmann direkt erkennbar, dass das Jungtier beim Versuch diesen Saugnuckel ins Maul zu bekommen keinen Erfolg haben wird, oder im unwahrscheinlichen Falle eines Erfolges, den Saugnuckel im Moment der Aufnahme ins Maul so stark umbiegen würde, dass dieser nicht mehr flüssigkeitsdurchströmbar und somit funktionslos ist. Das führt zu einer Demotivation des Jungtieres und in keinem Fall zu einer erleichterten Milchaufnahme. Die Unterseite des künstlichen Euters in der Schrift FR 1 543 353 erfüllt also nicht die Aufgabe, ein Jungtier zum Saugnuckel intuitiv hinzuführen. Ähnlich zur Problematik der Unterseite des künstlichen Euters in der Schrift US 394 955 ist also auch in der Schrift FR 1 543 353 kein Führungselement vorhanden, das ein Jungtier direkt zum Saugnuckel führt.

Zusammenfassend lässt sich sagen, dass der Stand der Technik kein Führungselement beinhaltet, welches ein Jungtier funktional zum Saugnuckel hinführt, sodass dieses anschließend den Saugnuckel in physiologischer Art und Weise ins Maul aufnehmen und in physiologischer Saughaltung daraus trinken kann. Die im Stand der Technik enthaltenen technischen Merkmale lösen die Aufgabe der Erfindung nicht.

Ein weiterer Nachteil der drei oben angeführten Patentschriften besteht darin, dass die Unterseite der Polsterung bei der Schrift US 394 955, die Unterseite der Reservoirkammer bei der Schrift CN 106 962 219 und die Unterseite der Reservoirkammer 1 bzw. des künstlichen Euters 2 bei der Schrift FR 1 543 353 nicht die Funktion als Führungselement im Sinn der Erfindung erfüllen können. Diese Bauteile aus dem Stand der Technik sind fest mit den jeweiligen Vorrichtungen verbunden. Sie stellen also kein abnehmbares, hochklappbares oder biegbares Führungselement dar und können nicht von der Reservoirkammer oder vom Saugnuckel getrennt werden. Damit zeigt der Stand der Technik auch keine Möglichkeit, ein bekanntes Tränkesystem mit einem Führungselement nachzurüsten.

### Aufgabe

Die Aufgabe der vorliegenden Erfindung ist es, ein verbessertes Tränkesystem für die Versorgung von Säugetieren bereitzustellen. Dabei ist es unerheblich, welche Flüssigkeit das Säugetier trinken soll, es kann sich also um Milch, Milchersatz, Milchaustauscher, Wasser, Elektrolytlösungen oder flüssige Medikamente handeln. Dieses verbesserte Tränkesystem soll es ermöglichen, dass ein Jungtier den Weg zum Saugnuckel deutlich schneller als bei den herkömmlichen Tränkesystemen von alleine vollziehen kann, sodass der Arbeitszeitbedarf für das Anlernen des Tränkens der Säugetiere reduziert wird.

Das Jungtier soll nach dem automatischen und intuitiven Hinführen zum Saugnuckel diesen selber ins Maul aufnehmen und in einer physiologischen Körperhaltung trinken können. Gleichzeitig soll die Erfindung ermöglichen, dass bei Jungtieren mit Problemen beim Saugen eine fachkundige Person einfach und schnell das Jungtier unterstützen kann, indem die fachkundige Person das Jungtier von Hand an den Saugnuckel ansetzt. Dazu müssen die Saugnuckel sowohl in der passenden Position an der Reservoirkammer angeordnet sein, als auch möglichst frei für fachkundige Personen zugänglich sein.

Eine weitere Aufgabe der Erfindung ist es, dass das Tränkesystem mit Reservoirkammer, Verbindungselement, Saugnuckel und Führungselement einfach zu reinigen ist. Ebenso soll die Erfindung ermöglichen, bestehende Tränkesysteme mit einem Führungselement nachzurüsten, das heißt, es soll ein abnehmbares, hochklappbares oder biegsames Führungselement zur Verfügung gestellt werden.

Die Erfindung soll also sowohl einem Jungtier ermöglichen, sich selbstständig zum Saugnuckel vorzuarbeiten, aber gleichzeitig auch bei Problemfällen es einem Mitarbeitenden ermöglichen, einfach und schnell das Jungtier von Hand an den Saugnuckel anzusetzen. Diese Praktikabilität wird erfindungsgemäß durch die Form und die Winkelung des Führungselements erreicht, welche in ausführlichen wissenschaftlichen Versuchen erforscht wurden.

### Lösung der Aufgabe

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Das erfindungsgemäße Tränkesystem 100 ist so aufgebaut, dass ein auf einem Untergrund 200 stehendes Säugetier an das Tränkesystem 100 herantreten und an diesem saugen kann, um Flüssigkeiten wie z.B. Milch, Milchersatz, Milchaustauscher, Wasser, Elektrolytlösungen oder flüssige Medikamente aufzunehmen.

Das erfindungsgemäße Tränkesystem 100 zum Tränken von Säugetieren umfasst wenigstens:
Eine **Reservoirkammer 10,** welche zur Aufnahme von Flüssigkeiten oder von Behältnissen für Flüssigkeiten geeignet ist. Geeignete Flüssigkeiten sind beispielsweise Milch, Milchersatz, Milchaustauscher, Wasser, Elektrolytlösungen oder flüssige Medikamente. Die Reservoirkammer 10 kann in Form eines Eimers oder einer Wanne oder eines Containers ausgebildet sein, sie kann aber auch eine andere zweckmäßige Form aufweisen. Die Reservoirkammer 10 kann einen flachen Boden aufweisen, dieser stellt dann die Unterseite 10a der Reservoirkammer dar. Diese Ausführungsform wird bevorzugt, weil eine Reservoirkammer 10 mit einem flachen Boden auf einem Untergrund abgestellt werden kann, ohne dass die Reservoirkammer 10 umfällt. Die Reservoirkammer 10 kann alternativ auch einen gekrümmten, halbkugelförmigen oder trichterförmigen Boden aufweisen. Diese Anordnung hat den Vorteil, dass sich Reste der Flüssigkeit besser am Boden der Reservoirkammer 10 sammeln und leichter leergetrunken werden können.

Die Reservoirkammer 10 weist eine Unterseite 10a auf. Die Unterseite 10a der Reservoirkammer 10 kann waagerecht oder geneigt sein.

Ein **Verbindungselement 11,** das so an der Reservoirkammer 10 angeordnet ist, dass es die Reservoirkammer 10 mit einem Saugnuckel 20 flüssigkeitsdurchströmbar verbindet. Das Verbindungselement 11 kann beispielsweise ein Schraubverschluss mit einem Dichtungsring, ein Flansch oder ein Rohr mit Gewinde sein. In einer Ausführungsform ist der Saugnuckel 20 direkt mit der Reservoirkammer 10 flüssigkeitsdurchströmbar verbunden, sodass kein Verbindungselement 11 nötig ist. Bei diesem Ausführungsbeispiel handelt es sich nicht um einen Teil der Erfindung. Dieses Ausführungsbeispiel ist nicht erfindungsgemäß und dient lediglich der Veranschaulichung.

Ein **Saugnuckel 20,** der so an der Reservoirkammer 10 angeordnet ist, dass ein, auf einem Untergrund 200 unterhalb des Saugnuckels 20 stehendes Säugetier Flüssigkeiten durch diesen Saugnuckel 20 aufnehmen kann, wenn es an diesem saugt. Der Untergrund 200 ist in der Regel der Boden eines Stalles oder einer Box oder eines Kälberiglus. Der Saugnuckel 20 weist dabei einen Saugnuckelwinkel α von 20° bis 40° auf. Der Saugnuckelwinkel α ist der Winkel zwischen der Längsachse des Saugnuckels und einer waagerechten gedachten Linie. Da der Saugnuckel in der Regel mit seiner Saugnuckelspitze und der Saugnuckelöffnung nach unten weist, hat der Saugnuckelwinkel in der vorliegenden Erfindung ein negatives Vorzeichen. Der Saugnuckel 20 ist dazu vorzugsweise an der Unterseite 10a der Reservoirkammer 10 angeordnet. In einer Ausführungsform ist der Saugnuckel 20 an der Vorderseite der Reservoirkammer 10 angeordnet. In jedem Fall ist die Anordnung des Saugnuckels 20 an der Reservoirkammer 10 dergestalt, dass das Säugetier einfachen Zugang zum Saugnuckel 20 hat. Vorzugsweise ist der Saugnuckel an der untersten Stelle der Reservoirkammer 10 angeordnet, damit das saugende Tier den gesamten Inhalt der Reservoirkammer 10 trinken kann. Die Größe und Form des Saugnuckels ist abhängig von der Tierart und dem Alter des saugenden Tieres. Dem Fachmann ist eine Vielzahl von geeigneten Saugnuckeln bekannt.

Der Saugnuckel 20 ist gemäß der Erfindung in einem Saugnuckelwinkel α von 20° bis 40° zur Horizontalen ausgerichtet.

Die Wahl des Saugnuckelwinkels α ermöglicht es dem Säugetier in einer physiologischen Saughaltung (d.h. mit gespreizten Vorderbeinen, abgesenkter Schulter, gestrecktem Kopf in Verlängerung zum leicht durchgedrückten Hals und leicht angehobener Nase, welche höher als die Stirn ist) an dem Saugnuckel 20 zu saugen. Der Saugnuckel 20 zeigt mit der Nuckelöffnung in Richtung der von der Reservoirkammer 10 weggewandten Außenkante des Führungselementes 50, sodass ein Säugetier, welches sich entlang des Führungselementes 50 zum Saugnuckel 20 hinarbeitet, diesen direkt in korrekter Weise in das Maul aufnehmen kann. Die spezifische Anordnung ist aus Sicht des Säugetieres zunächst das Führungselement 50, dann der Saugnuckel 20 auf der Vorderseite oder im vorderen Bereich der Unterseite der Reservoirkammer 10. Der Saugnuckel 20 ist dazu vorzugsweise im vorderen Bereich der Unterseite 10a der Reservoirkammer 10 angeordnet.

Ein **Führungselement 50,** welches so zur Reservoirkammer 10 ausgerichtet ist, dass es ein Säugetier direkt zum Saugnuckel 20 hinführt. Dieses Führungselement 50 simuliert den Unterbauch eines Muttertiers, sodass ein Säugetier selbstständig den Saugnuckel 20 finden kann. Dies wird erreicht, indem das Führungselement 50 über dem Saugnuckel 20 angeordnet ist. Es ist dabei wesentlich, dass zwischen dem Saugnuckel 20 und dem Führungselement 50 ausreichend Platz ist, damit das Säugetier mit seiner Schnauze den Saugnuckel 20 umschließen kann. Der Abstand zwischen dem Saugnuckel 20 und dem Führungselement 50 darf jedoch nicht wesentlich größer als der für das Umschließen mit dem Maul benötigte Abstand sein, weil sonst das Führungselement 50 seine erfindungsgemäße Aufgabe nicht mehr erfüllt, da es nicht mehr zum Saugnuckel hinführt. Für den Einsatz beim Tränken von Kälbern beträgt dieser Abstand vorzugweise ca. 7 cm. Dieser Abstand bezieht sich auf den Abstand zwischen der Spitze des Saugnuckels mit der Saugnuckelöffnung und dem Führungselement 50. Für den Einsatz beim Tränken von anderen Tierarten wird dieser Abstand der Anatomie entsprechend angepasst. Diese Anpassung ist dem Fachmann unmittelbar verständlich.

Das Führungselement 50 ist über dem Saugnuckel 20 angeordnet und schließt direkt an der Basis des Saugnuckels ab.

Das erfindungsgemäße Tränkesystem kann auch eine Mehrzahl von Saugnuckeln aufweisen, wie es im Stand der Technik bekannt ist. Bei einer Mehrzahl von Saugnuckeln an einem Tränkesystem kann entweder für jeden Saugnuckel ein eigenes Führungselement 50 vorgesehen sein, oder ein gemeinsames Führungselement 50 für alle Saugnuckel. Im zweiten Fall muss die Größe des Führungselementes 50 so angepasst werden, dass bei jedem Saugnuckel die Führung des saugenden Tieres zum Saugnuckel hin gewährleistet ist.

Beim Gebrauch eines Tränkesystems wird dieses durch Milchreste, Speichel und andere in einem Tierstall vorhandene Kontaminationsquellen verunreinigt. Es ist daher notwendig, dass alle Bauteile des Tränkesystems gut zu reinigen sind, das heißt, dass sie abwaschbar sind und beständig gegenüber den bekannten sauren, basischen und neutralen Reinigungsmitteln sind. Daher wird auch das erfindungsgemäße Führungselement 50 aus einem dafür geeigneten Material gefertigt. In einer Ausführungsform wird das Führungselement 50 aus einem Schaumstoff hergestellt. Das hat den Effekt, dass das Führungselement 50 weich und formbar ist und somit den Unterbauch eines Muttertieres gut simuliert. Außerdem wird durch Schaumstoff als Material die Verletzungsgefahr für das saugende Tier verringert. In einem anderen Ausführungsbeispiel wird das Führungselement 50 aus Holz, Kunststoff oder Metall hergestellt. Das hat den Effekt, dass das Führungselement 50 robust ist. In einer weiteren Ausführungsform wird das Führungselement 50 aus Holz, Kunststoff oder Metall mit einem Überzug aus Schaumstoff versehen, um sowohl die Robustheit als auch die Weichheit und Formbarkeit sowie die geringere Verletzungsgefahr zu erreichen. Bei jeder Ausführungsform kann das Führungselement 50 zusätzlich noch mit einem abwaschbaren und wasserfesten Überzug aus einem Kunststoff versehen werden, um die Reinigung des Führungselementes 50 zu erleichtern.

Das Führungselement 50 ist gemäß der Erfindung in einem Führungswinkel β von 10° bis 40° zur Horizontalen ausgerichtet. In einer bevorzugten Ausführungsform ist das Führungselement 50 mit der Unterseite 10a der Reservoirkammer 10 verbunden und in einem Führungswinkel β von +10° bis +40° in Bezug auf eine horizontale Linie ausgerichtet.

In einer nicht erfindungsgemäßen Ausführungsform ist das Führungselement 50 mit der Vorderseite der Reservoirkammer 10 verbunden und in einem Führungswinkel β von +10° bis -10° in Bezug auf eine horizontale Linie ausgerichtet. In einer bevorzugten Ausführungsform ist das Führungselement 50 mit der Vorderseite der Reservoirkammer 10 verbunden und in einem Führungswinkel β von +10° bis +40° in Bezug auf eine horizontale Linie ausgerichtet.

Wenn die Reservoirkammer 10 eine ebene Unterseite hat, dann ist das Führungselement 50 in einem Führungswinkel β von +10° bis -10° im Bezug zur Unterseite der Reservoirkammer 10 angeordnet. In einer bevorzugten Ausführungsform ist bei ebener Unterseite der Reservoirkammer 10 das Führungselement 50 in einem Führungswinkel β von +10° bis +40° im Bezug zur Unterseite der Reservoirkammer 10 angeordnet.

Der optimale Führungswinkel β von dem Führungselement 50 zu einer horizontalen Linie beträgt +20° und bewirkt, dass sich das Säugetier eigenständig entlang des Führungselements 50 zum Saugnuckel 20 vorsuchen kann, dabei auch noch die äußerste, höchste Kante des Führungselementes 50 erreichen und zum Suchen nutzen kann und gleichzeitig das Ansetzen von Hand durch eine fachkundige Person bei Problemfällen möglich bleibt bzw. der Saugnuckel 20 durch das Führungselement 50 für fachkundige Personen nicht unzugänglich wird.

In einer Ausführungsform des erfindungsgemäßen Tränkesystems 100 ist das Führungselement 50 aus wasserfestem Schaumstoff (z.B. expandiertes Polystyrol, Polyurethan) ausgeführt. In einem weiteren Ausführungsbeispiel weist das Führungselement 50 aus wasserfestem Schaumstoff einen abwaschbaren und wasserfesten Überzug aus einem Kunststoff (z.B. PET) auf. Diese Ausführungsform weist den Vorteil auf, dass sie abwaschbar und formstabil ist. Gleichzeitig ist das Führungselement 50 aber weich genug, um Verletzungen des Säugetiers beim Trinken zu vermeiden und gleichzeitig biegsam, sodass das Personal das Führungselement 50 bei Bedarf nach oben wegbiegen kann.

In einer Ausführungsform des erfindungsgemäßen Tränkesystems 100 ist das Führungselement 50 als eine massive Platte aus Holz, Kunststoff oder Metall ausgebildet. Dies ist besonders robust und kostengünstig. Hierbei ist es möglich, dass das Führungselement 50 noch einen Überzug aus einem wasserfesten Schaumstoff umfasst, um Verletzungen des Säugetiers beim Trinken zu vermeiden. Der Schaumstoff besteht dabei aus einem hautfreundlichen Material z.B. expandiertes Polystyrol oder Polyurethan. In einem weiteren Ausführungsbeispiel weist das Führungselement 50 aus Holz, Kunststoff oder Metall mit dem Überzug aus einem wasserfesten Schaumstoff zusätzlich einen abwaschbaren und wasserfesten Überzug aus einem Kunststoff (z.B. PET) auf. Diese Ausführungsform weist den Vorteil auf, dass sie abwaschbar und formstabil ist. Gleichzeitig ist das Führungselement 50 aber weich genug, um Verletzungen des Säugetiers beim Trinken zu vermeiden. Bei dieser Ausführungsform können auch Scharniere zwischen Reservoirkammer 10 und Führungselement 50 genutzt werden, um das Führungselement 50 hochzuklappen und die Handhabung zum manuellen Anlernen oder bei der Reinigung zu erleichtern.

In einer Ausführungsform des erfindungsgemäßen Tränkesystems 100 ist das Führungselement 50 eine Vergrößerung der Unterseite 10a der Reservoirkammer 10. In diesem Fall stellt also die vergrößerte Unterseite 10a das Führungselement 50 dar und simuliert den Unterbauch eines Muttertiers, sodass ein Säugetier selbstständig den Saugnuckel finden kann.

In einer Ausführungsform ist das Führungselement 50 ein Gitter. Das hat den Vorteil, dass die Materialkosten geringer sind als bei einer massiven Platte aus Holz, Kunststoff oder Metall. Auch bei dieser Ausführungsform kann das Führungselement 50 einen Überzug aus einem wasserfesten Schaumstoff aufweisen und zusätzlich einen abwaschbaren und wasserfesten Überzug aus einem Kunststoff (z.B. PET).

Die Größe des Führungselements 50 richtet sich nach der Säugetierart. Kleinere Säugetiere wie beispielsweise Lämmer oder Zicklein benötigen ein kleineres Führungselement als beispielsweise Kälber.

Grundsätzlich muss das Führungselement 50 oder das Führungselement 50 in Kombination mit der Unterseite der Reservoirkammer 10a so groß sein, dass das Säugetier mindestens den vorderen Teil seines Kopfes bis zu den Augen zum Suchen unter das Führungselement 50 bringen kann.

Bei einem Tränkesystem für nur ein Kalb, also ein Tränkesystem mit nur einem Saugnuckel, ist die Größe des Führungselements 50 maximal ca. 40 x 45 cm (Breite x Tiefe). In einer bevorzugten Ausführungsform ist die Größe des Führungselements 50 30 bis 40 cm x 15 bis 30 cm (Breite x Tiefe). In einer besonders bevorzugten Ausführungsform ist die Größe des Führungselements 50 40 x 20 cm (Breite x Tiefe). Bei einem Tränkesystem für mehrere Säugetiere (beispielsweise einer Gruppentränkewanne) muss die Größe des Führungselements 50 an die Größe der Reservoirkammer 10 angepasst werden. Die Größe des Führungselements 50 hat einen Effekt auf die Praktikabilität und die Handhabung des gesamten Tränkesystems. Je größer das Führungselement 50 ist, desto umständlicher ist es in der Handhabung und in der Reinigung. Wenn das Führungselement 50 allerdings zu klein ist, dann verliert es den gewünschten Effekt, nämlich die Anatomie des Bauches des Muttertieres zu simulieren und damit das Säugetier zum Saugnuckel 20 hinzuführen.

In einer anderen Ausführungsform weist das Führungselement 50 in der Draufsicht eine konisch zulaufende oder kegelstumpfförmige Form auf, wobei die Breite des Führungselements 50 zum Saugnuckel 20 hin immer kleiner wird. Diese Form des Führungselements 50 ist vorteilhaft, weil es weniger Ecken und Kanten aufweist und damit die Verletzungsgefahr für die Kälber verringert.

In einer Ausführungsform weist das Führungselement 50 aus der Seitenansicht eine ebene, planare Form auf. Diese Form ist günstiger in der Produktion. In einem anderen Ausführungsbeispiel weist das Führungselement 50 in Anlehnung an die Unterbauchform eines Muttertieres aus der Seitenansicht eine zumindest abschnittsweise gekrümmte Form auf. Dabei weist die konvexe Seite nach unten, um eine möglichst naturgetreue Simulation des Unterbauches eines Muttertieres zu erzielen. Diese Form unterstützt besonders vorteilhaft die intuitive Suche des Säugetieres nach der Zitze.

In einer Ausführungsform weist das Tränkesystem 100 noch mindestens ein Halteelement 60 auf. Dieses ist mit der Reservoirkammer 10 verbindbar und so ausgebildet, dass das Tränkesystem 100 direkt an einem Boxengitter oder Kälberiglu einhängbar ist. Dabei kann es sich z.B. um einen oder mehrere Haken, Clips, Scharniere oder Gummizüge handeln. Dabei ist das Halteelement 60 so angeordnet, dass der Platz zwischen der Unterseite 10a der Reservoirkammer 10 und dem Untergrund 200 ausreicht, damit ein Säugetier den Saugnuckel 20 in der natürlichen physiologischen Saughaltung erreichen kann. Der Abstand zwischen dem Untergrund 200 und der Unterseite 10a der Reservoirkammer 10 beträgt dabei bei einem Tränkesystem für Kälber vorzugsweise 50 bis 80 cm. Der optimale Abstand unterscheidet sich aber von Tierart zu Tierart. Eine Anpassung auf die jeweilige optimale Höhe ist ohne Probleme möglich und erschließt sich direkt dem Fachmann.

In einer weiteren Ausführungsform weist das Tränkesystem 100 wenigstens ein Standelement 70 auf. Dieses ist mit der Reservoirkammer 10 verbindbar, vorzugsweise ist es mit der Unterseite 10a der Reservoirkammer 10 verbindbar. Dabei ist das Standelement 70 so angeordnet, dass das Standelement 70 einen Abstand zwischen der Unterseite 10a der Reservoirkammer 10 und dem Untergrund 200 bildet, der ausreicht, damit das Säugetier den Saugnuckel 20 in der natürlichen physiologischen Saughaltung erreichen kann. Der Abstand zwischen dem Untergrund 200 und der Unterseite 10a der Reservoirkammer 10 beträgt dabei bei einem Tränkesystem für Kälber vorzugsweise 50 cm bis 80 cm. Der optimale Abstand unterscheidet sich aber von Tierart zu Tierart. Eine Anpassung auf die jeweilige optimale Höhe ist ohne Probleme möglich und erschließt sich direkt dem Fachmann. Als Standelement 70 können ein oder mehrere Standfüße dienen. Bei der Verwendung von mehreren Standfüßen als Standelement sind diese vorzugsweise untereinander verbunden, um eine höhere Stabilität zu erreichen.

Die Verwendung eines Halteelementes 60 und eines Standelementes 70 ist dabei grundsätzlich kombinierbar.

Der Kern der Erfindung besteht aus dem Führungselement 50, weil dadurch die Säugetiere wie beispielsweise Kälber dazu gebracht werden, den Saugnuckel eines Tränkesystems intuitiv zu finden. Daher umfasst die Erfindung auch ein Nachrüstset, bestehend aus einem Führungselement 50 und einer Vorrichtung zur Befestigung des Führungselements 50 an einem Tränkesystem aus dem Stand der Technik. Das Nachrüstset, bestehend aus einem Führungselement 50 und einer Vorrichtung zur Befestigung des Führungselements 50 kann auch an der Behausungsbegrenzung (z.B. Kälberiglugitter) direkt über dem Einführungsloch für den Saugnuckel eines herkömmlichen Tränkeimers befestigt werden. Bei der Vorrichtung zur Befestigung kann es sich z.B. um einen oder mehrere Haken, Clips, Scharniere oder Gummizüge handeln. Dies hat den Vorteil, dass das Führungselement 50 komplett vom Tränkesystem 100 abnehmbar ist, sobald das Jungtier den Saugnuckel 20 sicher eigenständig auffindet. Ebenso kann das beschriebene Nachrüstset, umfassend ein Führungselement 50, formschlüssig oder kraftschlüssig an einem Tränkesystem aus dem Stand der Technik befestigt werden.

Das erfindungsgemäße Tränkesystem zum Tränken von Säugetieren umfasst eine Reservoirkammer 10 mit einer Unterseite 10a, ein Verbindungselement 11, mindestens einen Saugnuckel 20 und ein Führungselement 50. Die Reservoirkammer 10 ist zur Aufnahme von Flüssigkeiten geeignet. Die Reservoirkammer 10 ist ebenso geeignet, einen oder mehrere Behältnisse für Flüssigkeiten aufzunehmen. Das Verbindungselement 11 ist so angeordnet, dass es die Reservoirkammer 10 mit dem mindestens einen Saugnuckel 20 flüssigkeitsdurchströmbar verbindet. Der mindestens eine, flüssigkeitsdurchströmbar über das Verbindungselement 11 mit der Reservoirkammer 10 verbundene Saugnuckel 20 ist so mit der Reservoirkammer 10 verbunden, dass ein auf einem Untergrund 200 stehendes Säugetier Flüssigkeiten aus der Reservoirkammer 10 durch den mindestens einen Saugnuckel 20 aufnehmen kann, wenn es an dem Saugnuckel 20 saugt. In einer bevorzugten Ausführungsform umfasst der Saugnuckelwinkel α einen Bereich von -40° bis -20°. In einer besonders bevorzugten Ausführungsform umfasst der Saugnuckelwinkel α -30°. Der Saugnuckelwinkel α ist dabei der Winkel zwischen einer gedachten horizontalen Linie und der Längsachse des Saugnuckels 20 von seiner Basis bis zu seiner Spitze mit der Saugnuckelöffnung. Das mit der Reservoirkammer 10 verbundene Führungselement 50 erfüllt die erfindungsgemäße Funktion, nämlich einerseits das Hinführen des Säugetieres zum Saugnuckel und andererseits die leichte Zugänglichkeit des Saugnuckels für einen Mitarbeiter, der bei erfolglosen Säugetieren unterstützen muss. Die Verbindung des Führungselements 50 mit der Reservoirkammer 10 befindet sich oberhalb des Saugnuckels 20. Das erleichtert dem Säugetier das Auffinden des Saugnuckels, weil sich unter physiologischen Verhältnissen beim stehenden Muttertier auch die Bauchdecke oberhalb der Zitzen befindet. Das Führungselement 50 umfasst in einer bevorzugten Ausführungsform gegenüber einer gedachten horizontalen Linie einen Führungswinkel β in einem Bereich von +10° bis +40°. In einer besonders bevorzugten Ausführungsform umfasst der Führungswinkel β +20°. Dieser Führungswinkel wurde in umfassenden wissenschaftlichen Versuchen als der geeignetste identifiziert, weil damit sowohl die Kälber zuverlässig zum Saugnuckel geleitet werden als auch das Ansetzen des Kalbes von Hand durch einen Mitarbeitenden einfach möglich ist.

Das erfindungsgemäße Führungselement 50 ist so groß, dass das Säugetier mindestens den vorderen Teil seines Kopfes (Schnauzenspitze bis zu den Augen) zum Suchen des Saugnuckels darunter bringen kann. Dies entspricht im Wesentlichen dem normalen Suchreflex bei Säugetieren. In einem Ausführungsbeispiel weist daher das Führungselement 50 für Kälber eine Größe im Bereich von 30 bis 40 cm für die Breite (B) und 15 bis 30 cm für die Tiefe (T) auf. In einem bevorzugten Ausführungsbeispiel weist das Führungselement 50 für Kälber eine Größe im Bereich von 40 x 20 cm (B x T) auf. Wenn das erfindungsgemäße Tränkesystem 100 nicht nur einen Saugnuckel 20 umfasst, sondern mehrere, dann müssen die Abmessungen des Führungselements 50 der Anzahl der Saugnuckel 20 angepasst werden. Wenn das erfindungsgemäße Tränkesystem nicht für Kälber vorgesehen ist, sondern für andere Säugetiere (z.B. Lämmer, Kitze, Dromedarfohlen, Kamelfohlen), dann müssen die Abmessungen des Führungselements 50 den anatomischen Verhältnissen der jeweiligen Säugetiere angepasst werden. Es ist wichtig, dass das Führungselement 50 länger ist als der Saugnuckel 20, damit das Säugetier bei der Suche nach einem Saugnuckel zuerst auf das Führungselement trifft und dann durch das Führungselement automatisch zum Saugnuckel geführt wird. Ebenso ist es wichtig, dass das Führungselement 50 direkt zur Basis des Saugnuckels 20 hinführt. Da der Saugnuckel einen Saugnuckelwinkel α in einem Bereich von -40° bis -20° aufweist und so angebracht ist, dass die Saugnuckelöffnung in Richtung des äußeren Endes des Führungselements 50 zeigt (also direkt auf das Maul des Säugetieres) wird durch die erfindungsgemäße Vorrichtung das Säugetier in eine physiologische Körperhaltung gebracht, in der es am besten saugen kann (d.h. mit gespreizten Vorderbeinen, abgesenkter Schulter, gestrecktem Kopf in Verlängerung zum leicht durchgedrückten Hals und leicht angehobener Nase, welche damit höher als die Stirn liegt).

Das erfinderische Führungselement 50 kann fest an der Reservoirkammer 10 montiert sein, oder abnehmbar, also reversibel befestigt werden. Dadurch ändert sich nicht die erfindungsgemäße Funktion des Führungselements 50. Die abnehmbare Befestigung des Führungselements 50 an der Reservoirkammer 10 kann mittels eines Verbindungsmittels oder mittels eines geeigneten biegsamen Materials erfolgen. Als Verbindungsmittel sind Scharniere, Haken, Steck- oder Klickverbindungen möglich, sofern sie eine reversible Verbindung des Führungselements 50 mit der Reservoirkammer 10 ermöglichen. Die feste Montage des Führungselements 50 an der Reservoirkammer 10 hat den Vorteil, dass damit das gesamte Tränkesystem robuster ist. Die abnehmbare Befestigung des Führungselements 50 an der Reservoirkammer 10 hat den Vorteil, dass bereits vorhandene Reservoirkammern 10 (beispielsweise handelsübliche Nuckeleimer) mit einem Führungselement 50 nachgerüstet werden können. Ebenso kann bei einem Defekt nur das defekte Bauteil ausgetauscht werden und es muss nicht das gesamte Tränkesystem ersetzt werden. Ein weiterer Vorteil des abnehmbaren Führungselements 50 ist, dass es komplett vom Tränkesystem entfernt werden kann, beispielsweise um es zu säubern oder sobald das Jungtier den Saugnuckel sicher eigenständig auffindet und daher kein Führungselement mehr benötigt. Das Führungselement 50 ist frei mit der Reservoirkammer 10 oder der Behausungsabgrenzung (Kälberiglugitter) mittels eines Verbindungsmittels verbindbar angeordnet, sodass das Führungselement 50 vom Tränkesystem 100 abnehmbar ist, sobald das Jungtier den Saugnuckel sicher eigenständig auffindet. Als Verbindungsmittel kommen dafür Scharniere, Haken, Steck- oder Klickverbindungen in Frage. In einer Ausführungsform ist das Führungselement 50 mittels eines biegsamen Materials mit der Reservoirkammer 10 verbunden. Dadurch lässt sich das Führungselement 50 von der Reservoirkammer 10 hochbiegen bzw. hochklappen.

Das erfinderische Führungselement 50 kann viereckig (rechteckig) ausgestaltet sein. Das hat den Vorteil, dass es kostengünstiger in der Herstellung ist. Der Nachteil besteht in den Ecken und Kanten, welche eine gewisse Verletzungsgefahr bedeuten. Um diesen Nachteil zu beheben, können die Ecken und Kanten gebrochen oder geschliffen werden, mit einer Schutzhülle im Sinn einer Polsterung versehen werden oder es wird ein Führungselement 50 mit abgerundeten Ecken verwendet. Dadurch ändert sich nicht die erfindungsgemäße Funktion des Führungselements 50.

Das erfinderische Führungselement 50 kann plan ausgestaltet sein. Das hat den Vorteil, dass es kostengünstiger in der Herstellung ist. Das erfinderische Führungselement 50 kann aber auch gebogen oder trichterförmig ausgestaltet sein. Das hat den Vorteil, dass die Konturen des Führungselements 50 noch mehr die physiologischen Gegebenheiten eines Kuhbauches nachahmen.

Das erfinderische Tränkesystem 100 muss sich in einem geeigneten Abstand zum Boden befinden, damit ein auf dem Boden stehendes Säugetier auch das äußere Ende des Führungselements 50 mit dem Kopf erreichen kann. Das ist wichtig, weil über den Kopfkontakt mit dem Führungselement 50 beim Säugetier das Suchverhalten zum Saugnuckel 20 hin ausgelöst wird, analog zum Kopfkontakt mit dem Bauch des Muttertieres.

Die in der Aufgabe zur Erfindung gestellten Anforderungen hinsichtlich der intuitiven Suche des Kalbes nach dem Saugnuckel 20 und hinsichtlich der Praktikabilität für Mitarbeiter bei Unterstützung des Kalbes, werden mit einer zum Jungtier hin offenen Winkelung von +10 bis +40° des Führungselementes erreicht.

### Abbildungslegenden und Bezugszeichenliste

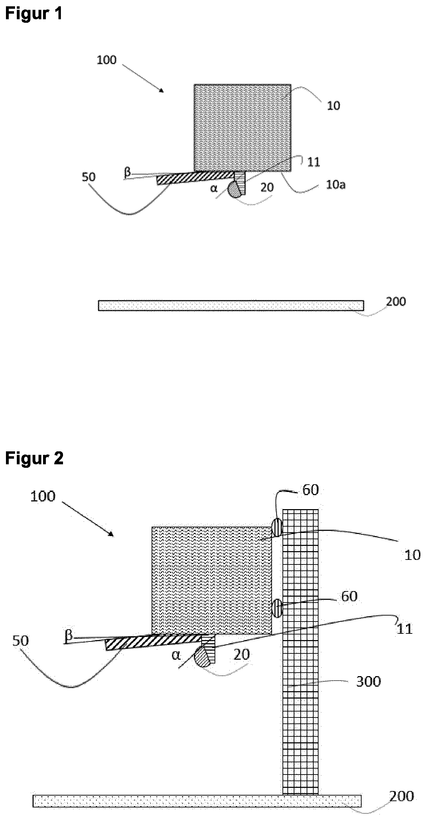

Figur 1 zeigt das Tränkesystem 100 in seiner allgemeinsten Ausführungsform
Figur 2 zeigt das Tränkesystem 100 mit einem Halteelement 60 zur Befestigung an einer Boxen- oder Kälberigluwand 300

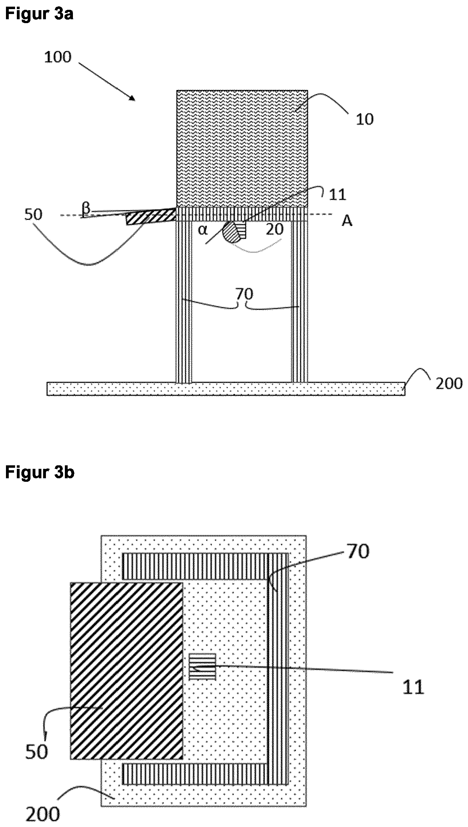

Figur 3a zeigt das Tränkesystem 100 mit Standelementen 70 zum Aufstellen auf dem Untergrund 200.
Figur 3b zeigt einen Querschnitt des Tränkesystems 100 mit Standelementen 70 zum Aufstellen auf dem Untergrund 200 in der Ebene A aus Figur 3a.

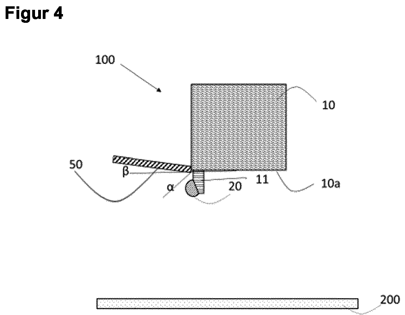

Figur 4 zeigt das Tränkesystem 100 gemäß der Erfindung mit dem Führungselement 50 in einem Führungswinkel β von +20° zwischen dem Führungselement 50 und einer gedachten horizontalen Linie.

### Bezugszeichen

10 Reservoirkammer
10a Unterseite der Reservoirkammer
11 Verbindungselement
20 Saugnuckel
50 Führungselement
60 Halteelement
70 Standelement
100 Tränkesystem
200 Untergrund
300 Boxen- oder Kälberigluwand

## Patentansprüche

1. Tränkesystem (100) zum Tränken von Säugetieren, die im Stehen trinken, umfassend wenigstens
- eine Reservoirkammer (10) mit einer Unterseite (10a), welche zur Aufnahme von Flüssigkeiten oder von Behältnissen für Flüssigkeiten geeignet ist,
- ein Verbindungselement (11), das so angeordnet ist, dass es die Reservoirkammer (10) mit einem Saugnuckel (20) flüssigkeitsdurchströmbar verbindet,
- einen Saugnuckel (20), der über das Verbindungselement (11) so mit der Reservoirkammer (10) verbunden ist, dass ein auf einem Untergrund stehendes Säugetier Flüssigkeiten aus der Reservoirkammer (10) durch diesen Saugnuckel (20) aufnehmen kann, wenn es an diesem saugt,
**dadurch gekennzeichnet, dass** der Saugnuckel (20) in einem Saugnuckelwinkel α von 20° bis 40° zur Horizontalen ausgerichtet ist, wobei das Tränkesystem (100) weiterhin ein Führungselement (50) aufweist, welches mit der Reservoirkammer (10) verbunden ist, wobei sich die Verbindung des Führungselements (50) mit der Reservoirkammer (10) oberhalb des Saugnuckels (20) befindet und das Führungselement (50) in einem Führungswinkel β von +10° bis +40° zur Horizontalen ausgerichtet ist, so dass ein Säugetier mittels des Führungselements (50) zum Saugnuckel (20) geführt werden kann.

2. Tränkesystem (100) nach Anspruch 1, **dadurch gekennzeichnet, dass** das Tränkesystem (100) weiterhin mindestens ein Halteelement (60) aufweist, wobei das Halteelement (60) mit der Reservoirkammer (10) verbindbar und so ausgebildet ist, dass das Tränkesystem (100) direkt an eine Boxen- oder Kälberigluwand (300) einhängbar ist.

3. Tränkesystem (100) gemäß einem der vorherigen Ansprüche, **dadurch gekennzeichnet, dass** das Tränkesystem (100) weiterhin mindestens ein Standelement (70) aufweist, wobei das Standelement (70) mit der Unterseite (10a) der Reservoirkammer (10) verbindbar und so angeordnet ist, dass es einen Abstand zwischen der Unterseite (10a) der Reservoirkammer (10) und einem Untergrund (200) bildet, sodass ein Säugetier den Saugnuckel (20) stehend erreichen kann.

4. Tränkesystem (100) gemäß einem der vorherigen Ansprüche, **dadurch gekennzeichnet, dass** das Führungselement (50) eine Platte aus Holz, Kunststoff oder Metall umfasst.

5. Tränkesystem (100) gemäß Anspruch 4, **dadurch gekennzeichnet, dass** das Führungselement (50) einen Überzug aus einem Schaumstoff umfasst.

6. Tränkesystem (100) gemäß Anspruch 5, **dadurch gekennzeichnet, dass** das Führungselement (50) über dem Schaumstoff einen abwaschbaren und wasserfesten Überzug aus einem Kunststoff aufweist.

7. Tränkesystem (100) gemäß einem der vorherigen Ansprüche 1 bis 6, **dadurch gekennzeichnet, dass** das Führungselement (50) aus Schaumstoff ausgeführt ist.

8. Tränkesystem (100) gemäß einem der vorherigen Ansprüche, **dadurch gekennzeichnet, dass** das Führungselement (50) planar ausgebildet ist.

9. Tränkesystem (100) gemäß einem der Ansprüche 1 bis 7, **dadurch gekennzeichnet, dass** das Führungselement (50) zumindest abschnittsweise gekrümmt ausgebildet ist.

10. Tränkesystem (100) gemäß einem der vorherigen Ansprüche, **dadurch gekennzeichnet, dass** das Führungselement (50) mit der Reservoirkammer (10) einstückig ausgebildet ist.

11. Tränkesystem (100) gemäß einem der Ansprüche 1 bis 9, **dadurch gekennzeichnet, dass** das Führungselement (50) mittels eines Verbindungsmittels verbindbar mit der Reservoirkammer (10) ausgebildet ist, so dass das Führungselement (50) gegenüber der Reservoirkammer (10) beweglich ist.

12. Tränkesystem (100) gemäß einem der vorherigen Ansprüche, **dadurch gekennzeichnet, dass** die Reservoirkammer (10) zur Aufnahme von Milch, Milchersatz, Milchaustauscher, Wasser, Elektrolytlösungen oder flüssigen Medikamenten oder zur Aufnahme von Behältnissen für Milch, Milchersatz, Milchaustauscher, Wasser, Elektrolytlösungen oder flüssige Medikamente geeignet ist.

13. Tränkesystem (100) gemäß einem der vorherigen Ansprüche, **dadurch gekennzeichnet, dass** das Führungselement (50) eine Größe zwischen 40 x 30 cm und 30 x 15 cm aufweist.

14. Tränkesystem (100) gemäß einem der vorherigen Ansprüche, **dadurch gekennzeichnet, dass** das Führungselement (50) eine Größe von 40 x 20 cm aufweist.

## Claims

1. A feeding system (100) for feeding mammals that drink while standing, comprising at least
- a reservoir chamber (10) with a bottom side (10a) suitable for holding liquids or containers for liquids,
- a connecting element (11) arranged in such a way that it connects the reservoir chamber (10) to an artificial teat (20) so that liquid can flow through,
- an artificial teat (20) connected to the reservoir chamber (10) via the connecting element (11) in such a way that a mammal standing on a surface can ingest liquids from the reservoir chamber (10) through this artificial teat (20) when it sucks on it,
**characterized in that** the artificial teat (20) is aligned at a teat angle α of 20° to 40° to the horizontal, while the feeding system (100) further comprises a guiding element (50) which is connected to the reservoir chamber (10), in such a way that the connection of the guiding element (50) to the reservoir chamber (10) is located above the artificial teat (20) and the guiding element (50) is aligned at a guiding angle β of +10° to +40° to the horizontal, so that a mammal can be guided to the artificial teat (20) by means of the guiding element (50).

2. Feeding system (100) according to claim 1, **characterized in that** the feeding system (100) further comprises at least one retaining element (60), whereby the retaining element (60) can be connected to the reservoir chamber (10) and is designed in such a way that the feeding system (100) can be mounted directly onto a calf pen or calf igloo wall (300).

3. Feeding system (100) according to one of the previous claims, **characterized in that** the feeding system (100) further comprises at least one stand element (70), whereby the stand element (70) is connectable to the bottom side (10a) of the reservoir chamber (10) and is arranged in such a way that it forms a distance between the bottom side (10a) of the reservoir chamber (10) and a surface (200) so that a mammal can reach the artificial teat (20) while standing.

4. Feeding system (100) according to one of the previous claims, **characterized in that** the guiding element (50) comprises a plate made of wood, plastic, or metal.

5. Feeding system (100) according to claim 4, **characterized in that** the guiding element (50) comprises a padding made out of foam.

6. Feeding system (100) according to claim 5, **characterized in that** the guiding element (50) has a washable and waterproof cover made out of plastic over the foam padding.

7. Feeding system (100) according to one of the previous claims 1 to 6, **characterized in that** the guiding element (50) is made out of foam.

8. Feeding system (100) according to one of the previous claims, **characterized in that** the guiding element (50) is designed in a flat shape.

9. Feeding system (100) according to one of claims 1 to 7, **characterized in that** the guiding element (50) is designed in a curved shape at least in sections.

10. Feeding system (100) according to one of the previous claims, **characterized in that** the guiding element (50) and the reservoir chamber (10) are constructed as one single piece.

11. Feeding system (100) according to one of claims 1 to 9, **characterized in that** the guiding element (50) is designed to be connectable to the reservoir chamber (10) by means of a connecting part, so that the guiding element (50) is movable relative to the reservoir chamber (10).

12. Feeding system (100) according to one of the previous claims, **characterized in that** the reservoir chamber (10) is suitable for holding milk, milk substitute, milk replacer, water, electrolyte solutions, or liquid medications, or for holding containers for milk, milk substitute, milk replacer, water, electrolyte solutions, or liquid medications.

13. Feeding system (100) according to one of the previous claims, **characterized in that** the guiding element (50) has a size between 40 x 30 cm and 30 x 15 cm.

14. Feeding system (100) according to one of the previous claims, **characterized in that** the guiding element (50) has a size of 40 x 20 cm.

## Revendications

1. Système de nourrisage (100) destiné à nourrir des mammifères qui boivent debout, comprenant au moins
- une chambre réservoir (10) avec une face inférieure (10a) adaptée pour recevoir des liquides ou des récipients pour liquides,
- un élément de raccordement (11) disposé de manière à relier la chambre réservoir (10) à une tétine (20) pour permettre le passage du liquide,
- une tétine (20) reliée à la chambre réservoir (10) par l'intermédiaire de l'élément de raccordement (11) de telle sorte qu'un mammifère debout sur un support puisse ingérer les liquides de la chambre réservoir (10) par cette tétine (20) lorsqu'il la tète,
**caractérisé en ce que** la tétine (20) est orientée selon un angle α compris entre 20° et 40° par rapport à l'horizontale, le système de nourrisage (100) comportant en outre un élément de guidage (50) qui est relié à la chambre réservoir (10), la liaison de l'élément de guidage (50) avec la chambre réservoir (10) se trouve au-dessus de la tétine (20) et l'élément de guidage (50) est orienté selon un angle de guidage β compris entre +10° et +40° par rapport à l'horizontale, de sorte qu'un mammifère peut être guidé vers la tétine (20) à l'aide de l'élément de guidage (50).

2. Système de nourrisage (100) selon la revendication 1, **caractérisé en ce que** le système de nourrisage (100) comprend en outre au moins un élément de fixation (60), l'élément de fixation (60) pouvant être relié à la chambre réservoir (10) et étant conçu de telle sorte que le système de nourrisage (100) puisse être accroché directement à une paroi de box ou d'igloo à veaux (300).

3. Système de nourrisage (100) selon l'une des revendications précédentes, **caractérisé en ce que** le système de nourrisage (100) comprend en outre au moins un élément de support (70), l'élément de support (70) pouvant être relié à la face inférieure (10a) de la chambre de réservoir (10) et étant agencé de manière à former un espace entre la face inférieure (10a) de la chambre de réservoir (10) et un sol (200), de sorte qu'un mammifère puisse atteindre la tétine (20) en position debout.

4. Système de nourrisage (100) selon l'une des revendications précédentes, **caractérisé en ce que** l'élément de guidage (50) comprend une plaque en bois, en plastique ou en métal.

5. Système de nourrisage (100) selon la revendication 4, **caractérisé en ce que** l'élément de guidage (50) comprend un revêtement en mousse.

6. Système de nourrisage (100) selon la revendication 5, **caractérisé en ce que** l'élément de guidage (50) présente, par-dessus la mousse, un revêtement lavable et imperméable en plastique.

7. Système de nourrisage (100) selon l'une des revendications 1 à 6 précédentes, **caractérisé en ce que** l'élément de guidage (50) est réalisé en mousse.

8. Système de nourrisage (100) selon l'une des revendications précédentes, **caractérisé en ce que** l'élément de guidage (50) est de forme plane.

9. Système de nourrisage (100) selon l'une des revendications 1 à 7, **caractérisé en ce que** l'élément de guidage (50) est courbé au moins par sections.

10. Système de nourrisage (100) selon l'une des revendications précédentes, **caractérisé en ce que** l'élément de guidage (50) est réalisé d'un seul tenant avec la chambre réservoir (10).

11. Système de nourrisage (100) selon l'une des revendications 1 à 9, **caractérisé en ce que** l'élément de guidage (50) est conçu pour être relié à la chambre réservoir (10) au moyen d'un moyen de liaison, de sorte que l'élément de guidage (50) est mobile par rapport à la chambre réservoir (10).

12. Système de nourrisage (100) selon l'une des revendications précédentes, **caractérisé en ce que** la chambre réservoir (10) est adaptée pour recevoir du lait, des substituts de lait, des substituts d'allaitement, de l'eau, des solutions électrolytiques ou des médicaments liquides, ou pour recevoir des récipients destinés à contenir du lait, des substituts de lait, des substituts d'allaitement, de l'eau, des solutions électrolytiques ou des médicaments liquides.

13. Système de nourrisage (100) selon l'une des revendications précédentes, **caractérisé en ce que** l'élément de guidage (50) a une taille comprise entre 40 x 30 cm et 30 x 15 cm.

14. Système de nourrisage (100) selon l'une des revendications précédentes, **caractérisé en ce que** l'élément de guidage (50) a une taille de 40 x 20 cm.
